# FASCICULE DE BREVET EUROPEEN

(11) **EP 1 134 136 B1**
(45) Date de publication et mention de la délivrance du brevet: **21.01.2009**
(21) Numéro de dépôt: 01400492.3
(22) Date de dépôt: 26.02.2001
(51) Int. Cl.: B60T 7/10, B60T 11/04

(54) **Procédé de montage d'un agencement tel qu'un frein à main, et ensemble pour la mise en oeuvre du procédé**
Montageverfahren für eine Handbremse und Vorrichtung zur Durchführung des Verfahrens
Mounting method for a hand brake device and assembly for applying the method

(30) Priorité: 24.02.2000 FR 0002354
(43) Date de publication de la demande: 19.09.2001
(73) Titulaire: Lisi Automotive Rapid, 95650 Puiseux Pontoise (FR); Küster Automotive Control Systems GmbH, 35630 Ehringshausen (DE)
(72) Inventeur: Leon, Jean-Pierre René, 78800 Houilles (FR); Demel, Otto, 69124 Heidelberg (DE); Reymann, Oliver, 35398 Giessen (DE); Günter, Hilgert, 35584 Wetzlar (DE); Wolf, Thomas, 35745 Herborn (DE)
(74) Mandataire: Berger, Helmut

(56) Documents cités:
- EP-A- 0 895 909
- DE-A- 19 618 421
- DE-A- 19 618 422
- US-A- 5 211 071

## Description

L'invention concerne un procédé pour le montage d'un agencement tel qu'un frein à main dans un véhicule, du type décrit dans le préambule de la revendication 1, ainsi qu'un ensemble pour la mise en oeuvre du procédé.

Un procédé de ce type et un ensemble pour sa mise en oeuvre sont déjà connus par le document DE 196 18 422. Ce procédé et cet ensemble ont pour inconvénient que le montage est compliqué dans la mesure où le déverrouillage de l'ensemble pour qu'il devienne opérationnel doit être effectué sélectivement et manuellement par un opérateur.

La présente invention a pour but de proposer un procédé et un ensemble pour la mise en oeuvre de celui-ci, qui pallient l'inconvénient sus-mentionné de l'état à la technique.

Pour atteindre ce but, le procédé selon l'invention comporte les caractéristiques énoncées dans la partie caractérisante de la revendication 1 et l'ensemble des caractéristiques de la revendication 3.

D'autres caractéristiques avantageuses de l'invention font les objets de revendications dépendantes.

Le document DE 19618422 décrit un ensemble de montage conventionel.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue éclatée, en perspective d'un ensemble selon l'invention, d'un agencement de frein à main pour véhicule automobile, et destiné à être monté dans un boîtier fixe sur le plancher du véhicule ;
- la figure 2 est une vue en coupe axiale de l'ensemble selon la figure 1, mais à l'état monté dans le boîtier ;
- la figure 3 est une vue en perspective de l'ensemble de la figure 1, à l'état pré-assemblé ;
- la figure 4 est une vue en perspective semblable à la figure 3, avec cependant la pièce située en bout démonté ; et
- la figure 5 est une vue en perspective d'une agrafe de verrouillage selon l'invention.

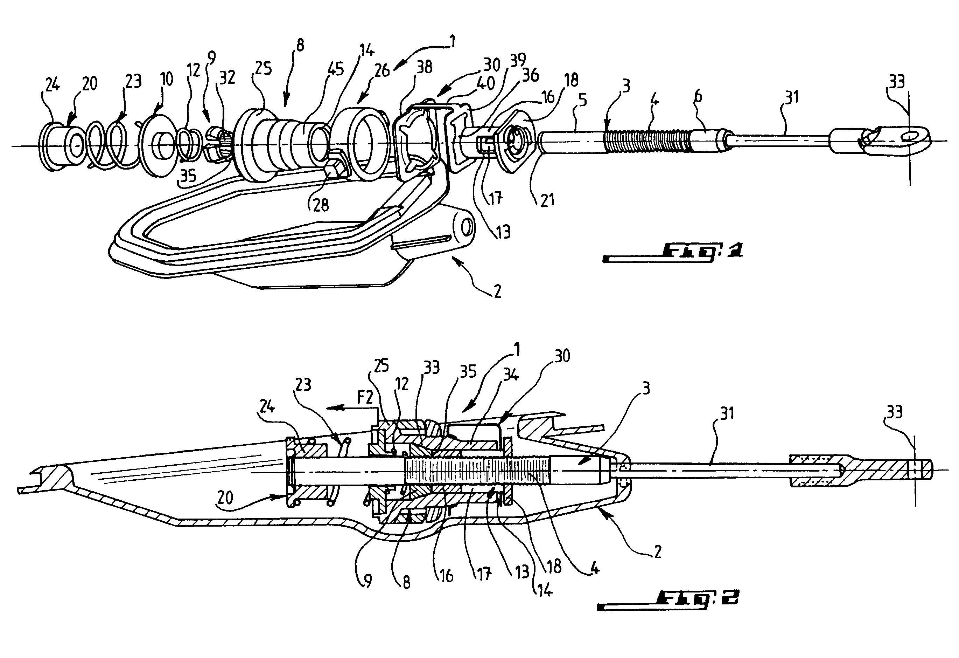

L'invention sera expliquée en prenant comme exemple son application à un agencement de frein à main pour véhicule automobile. La figure 1 montre les pièces constitutives de l'ensemble 1 destiné à être monté dans un boîtier 2 prévu dans le plancher d'un véhicule automobile.

Cet ensemble comprend essentiellement une tige 3 ayant une partie crantée 4, située entre des parties d'extrémité lisses 5 et 6, et à monter coaxialement sur la tige un corps creux tubulaire 8 en forme d'une douille dans laquelle la tige 3 sera axialement mobile, quatre segments 9 de blocage axial de la tige 3 dans la douille 8, une plaque circulaire annulaire 10 destinée à s'engager dans l'extrémité 11 de la douille 8, qui est adjacente aux segments de blocage 9, un ressort 12 axialement interposé entre la plaque de fermeture 10 et les segments 9 et constituant un moyen de rappel de ces segments dans leur position de blocage de la tige 3, une pièce 13 montée dans l'autre extrémité 14 de la douille 8 et comprenant une partie tubulaire 16 pourvue de deux fenêtres 17 diamétralement opposées et d'une bride extérieure 18, et une pièce d'appui d'extrémité 20 destinée à recevoir l'extrémité 21 de la tige 3 après le montage des différentes pièces susmentionnées sur la tige, ainsi qu'un ressort hélicoïdal 23 entourant coaxialement la partie lisse 5 de la tige 3 et prenant appui à ces deux extrémités, respectivement contre un rebord annulaire 24 de la pièce d'extrémité 20 et la plaque annulaire 10 de fermeture de la douille 8. L'ensemble comporte encore une bague 26 destinée à être emmanchée sur la douille 8 en venant en butée contre un rebord annulaire 25 à l'extrémité 11 de la douille. La bague comporte deux tenons 28 qui font radialement saillie de la bague, vers l'extérieur, sont situés diamétralement opposés et destinés au montage du levier d'actionnement du frein à main, non représenté.

La figure 1 montre encore que l'ensemble 1 selon l'invention comporte une agrafe de verrouillage et de déverrouillage de cet ensemble, qui porte le numéro de référence général 30, constitue un élément essentiel de la présente invention et dont la structure et la fonction sont décrites en détail ci-après. La figure 1 montre encore en 31 une tige dont une extrémité est fixée à l'extrémité libre de la tige 3 et dont l'autre extrémité est pourvue de moyens 33 de raccordement du câble d'actionnement du frein, qui n'est pas représenté.

La figure 2 montre l'ensemble comportant les pièces qui viennent d'être énoncées à l'état assemblé et monté à l'intérieur du boîtier 2. Cette figure montre aussi la structure interne de la douille 8. On constate que les quatre segments de blocage 9 entourent, à l'état monté, coaxialement la partie crantée 4 de la tige 3. Chaque segment 9 comporte une surface circulaire interne également crantée 32, qui est susceptible de venir en engagement avec la partie crantée 4 de la tige 3 sous l'effet d'une surface conique interne 33 de la douille 8. La portion conique sépare l'espace interne de la douille en deux portions cylindriques, une portion 34 d'un diamètre plus faible, dans laquelle est engagée coaxialement la partie tubulaire 16 de la pièce d'extrémité 13 et une portion cylindrique 35 d'un diamètre plus grand, dans l'ouverture de laquelle s'engage la plaque circulaire et annulaire de fermeture 10 et qui ménage un espace interne de logement du ressort de rappel 12 des segments de blocage 9. Le ressort 12 pousse les segments de blocage 9 dans leur position d'engagement avec la partie crantée 4 de la tige 3. Dans la position de repos représentée sur la figure 2, de l'ensemble cranté 1, les faces frontales intérieures 35 des segments 9 sont en appui contre la face frontale libre 36 de la partie tubulaire 16 de la pièce 13. La pièce 13 est de préférence réalisée en matière plastique et permet un déblocage sélectif des segments 9 lorsqu'elle est poussée axialement à l'intérieur de la douille 8. Le ressort 23 permet une compensation ou un rattrapage des jeux, notamment d'une élongation éventuelle du câble d'actionnement du frein.

A l'état à la fois prémonté et monté et prêt pour le fonctionnement, montrée sur la figure 2, l'agrafe de blocage 30 est interposée entre la douille 8 et la bride 18 de la pièce d'extrémité 13. On décrira ci-après la configuration et la fonction de cette agrafe 30.

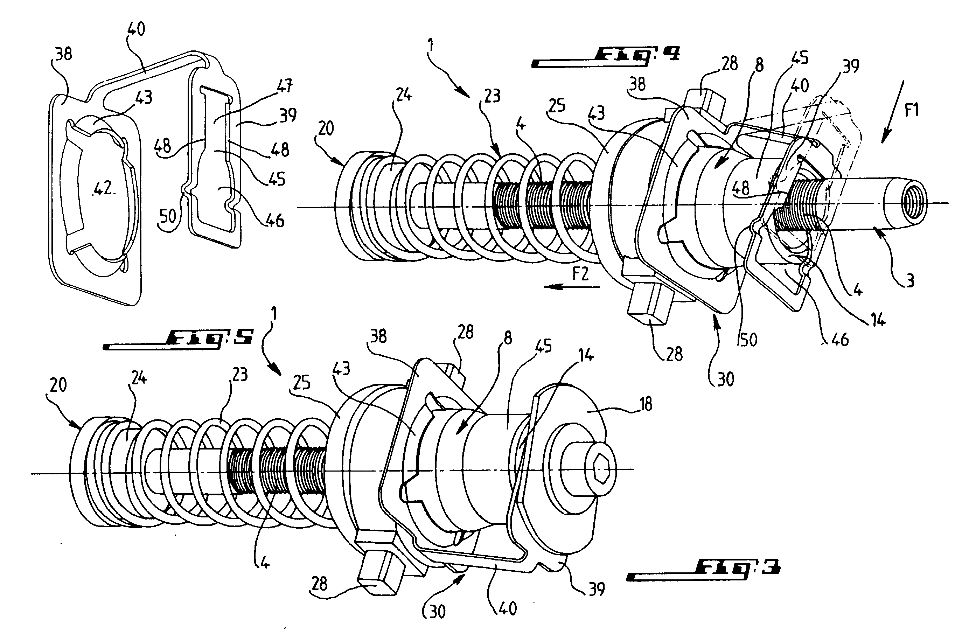

Comme on le constate notamment sur la figure 5, cette agrafe 30 comporte deux plaques planes sensiblement rectangulaires et parallèles l'une à l'autre 38 et 39, qui sont reliées par une barrette 40 élastiquement déformable. Cette barrette s'étend sensiblement perpendiculairement aux plaques 38 et 39. La plaque 38 est percée par une ouverture de forme circulaire 42. Sur la face en regard de la plaque 39, l'ouverture 42 comporte des volets arqués 43 qui sont inclinés par rapport à l'axe de cette ouverture et constituent des griffes de blocage de l'agrafe sur la surface extérieure de la douille. Ces griffes sont déformées élastiquement lors de l'emmanchement de l'agrafe sur la douille. Il est encore à noter que, à l'état emmanché sur la douille, la plaque 38 de l'agrafe assure le maintien de la bague 26 de fixation du levier de frein, dans sa position sur la douille 8.

Dans l'autre partie 39 de l'agrafe 30, est découpée une ouverture 45 qui comporte deux portions, à savoir une portion plus large 46 et une portion plus étroite 47. La portion 46 est dimensionnée de façon à permettre bien entendu le passage de la tige 3 mais également de la partie tubulaire 16 de la pièce d'extrémité de déverrouillage des segments de blocage 9. La partie 47 plus étroite comporte essentiellement deux arêtes parallèles 48 dont la distance est choisie de façon à permettre un blocage de la partie d'agrafe 39 sur la partie crantée 4 de la tige 3 par engagement des arêtes 38 entre les dents de cette portion. Pour assurer ce blocage axial de la partie d'agrafe 39, il suffit, après l'emmanchement de l'agrafe sur la douille 8, de pousser, la plaque d'agrafe 39 de sa position initiale dans laquelle la tige 3 passe à travers l'ouverture 46, perpendiculairement à l'axe de cette tige dans la position d'engagement des arêtes 48 dans la denture de la portion crantée 4. La position initiale de la plaque est représentée sur la figure 4 en traits mixtes. Ce déplacement en translation de la plaque d'agrafe 39 de sa position neutre dans sa position bloquée sur la tige 3 occasionne la déformation élastique de la barrette 40 de l'agrafe.

La partie d'agrafe 39 comporte encore, au niveau de l'ouverture 46, des saillies 50 sur chaque partie de bord de l'ouverture 46, qui sont orientées en direction de la plaque d'agrafe 38. Comme on le voit notamment sur la figure 4, ces saillies 50 viennent en prise derrière la face frontale 14 de la douille 8, lorsque la partie d'agrafe 39 se trouve dans sa position bloquée sur la tige 3. Ces saillies 50 empêchent un retour accidentel de la partie d'agrafe 39 dans sa position neutre. Seulement un déplacement d'éloignement de la douille 8, de la partie 39 permettrait un retour de la partie d'agrafe 39 de sa position bloquée, dans sa position neutre, sous l'effet de la force de rappel produite par la barrette élastiquement déformée 40. L'agrafe est avantageusement réalisée en métal.

On décrira ci-après les différentes étapes du procédé de montage selon l'invention rendues possible par l'agrafe 30.

La première étape du procédé selon l'invention réside dans un pré-assemblage des pièces montrées sur la figure 1, à l'extérieur du boîtier 2 en faisant passer la tige 3 axialement à travers les différentes pièces représentées, jusqu'à l'engagement de l'extrémité 21 de la tige dans la pièce d'ancrage 20. Des ressorts 12 et 23 s'opposent à ce pré-assemblage et, à la fin de cette opération de pré-assemblage, ces ressorts se trouvent à l'état comprimé et ont la tendance de s'étendre et de faire éclater l'ensemble prémonté ainsi obtenu. L'agrafe 30 permet de verrouiller l'ensemble 1 dans sa configuration pré-assemblée prêt pour le montage dans le boîtier 2. Au cours du pré-assemblage, la bague 26 est emmanchée sur la douille 8 jusqu'à ce qu'elle vienne en appui contre la collerette 25 et l'agrafe 30 est emmanchée sur la douille jusqu'à ce que la plaque plane 38 vienne en appui contre la face frontale adjacente de la bague 26. La mise en place de l'agrafe sur la douille s'accompagne d'une déformation élastique des volets formant griffes de blocage 43. Lors du pré-assemblage avec l'emmanchement de l'agrafe 30 sur la douille, la pièce 13 à travers laquelle passe la tige 3 est engagée dans l'ouverture 46 de plus grandes dimensions de la plaque d'agrafe 39. A la fin du pré-assemblage ou prémontage, pour bloquer l'ensemble à l'état prémonté, où l'agrafe 30 occupe la position indiquée en traits mixtes sur la figure 4, on pousse la partie d'agrafe 39 en direction de la flèche F1 de façon que la portion crantée 4 de la tige soit engagée entre les arêtes de blocage 48 de l'ouverture 47. Ce mouvement en translation provoque une déformation élastique de la barrette 40 et prend fin lorsque les saillies 50 viennent en prise derrière la face frontale 14 de la douille, comme on le voit clairement sur la figure 4. Etant donné que les arêtes 48 s'engagent entre les dents de la portion crantée 4, la tige est axialement bloquée et verrouillée dans cette position.

L'ensemble 1 ainsi pré-assemblé peut être transporté au lieu du montage du véhicule et placé dans le boîtier 2. Après la mise en place dans le boîtier, on établit les connexions de l'ensemble 1 au restant de l'agencement, en fixant notamment le levier de frein aux ergots 28 de la bague 26 et en fixant la tige 31 dans la tige 4 de l'ensemble 1. Après cette opération de connexion, le premier actionnement du levier de frein occasionne un déplacement de la douille 8 dans la direction de la flèche F2. Ce retrait de la douille libère la partie d'agrafe 39 qui peut ainsi, sous l'effet de la barrette élastiquement déformée 40, revenir dans sa position neutre représentée en traits mixtes sur la figure 4. Dans cette position, la tige 3 est libre de se déplacer axialement. Ainsi l'agencement est en état de fonctionner normalement. S'il s'avère nécessaire de démonter l'ensemble 1 du boîtier 2, il suffit de pousser à nouveau la plaque d'agrafe 39 dans sa position de blocage, de déconnecter l'ensemble de l'agencement de frein et de le retirer du boîtier.

## Revendications

1. Procédé pour le montage d'un agencement tel qu'un frein à main dans un véhicule, du type comportant un ensemble constitué d'une pluralité de pièces assemblables à l'encontre des forces de moyens de ressort, selon lequel on monte les pièces constitutives dudit ensemble sous l'effet desdits moyens de ressort dans un boîtier, selon lequel on pré-assemble les pièces constitutives de l'ensemble (1) précité pour obtenir un ensemble pré-assemblé ayant la configuration que l'ensemble aura à l'intérieur du boîtier (2), verrouille l'ensemble pré-assemblé dans cette configuration, le met en place dans le boîtier (2), établit les connexions de l'ensemble (1) ainsi pré-assemblé et monté dans le boîtier, audit agencement et déverrouille ensuite l'ensemble pré-assemblé et connecté, **caractérisé en ce que** le déverrouillage de l'ensemble (1) s'effectue automatiquement lors du premier actionnement de l'agencement.

2. Procédé de montage selon la revendication 1 d'un agencement comportant un ensemble qui comprend une tige d'actionnement d'un dispositif tel qu'un frein, axialement mobile à l'intérieur d'un corps tubulaire déplaçable par un organe de commande, ainsi que des pièces de solidarisation de la tige dudit corps creux et de libération de la tige, ainsi que des moyens de ressort s'opposant à l'assemblage de cet ensemble, **caractérisé en ce que** l'on associe à l'ensemble (1) une agrafe (30) de verrouillage de l'ensemble à l'état pré-assemblé précité, qui est déplaçable entre une position neutre de déverrouillage et une position de verrouillage, et **en ce que** l'on conçoit cette agrafe de façon qu'elle revienne automatiquement de sa position de verrouillage dans sa position de déverrouillage lors du premier actionnement de l'agencement.

3. Ensemble pour la mise en oeuvre du procédé selon la revendication 2, **caractérisé en ce que** l'agrafe (30) présente la forme générale d'un U dont une branche (38) est solidarisable dudit corps creux (8) et dont l'autre branche (39) constitue un moyen de blocage axial de la tige (3) et est déplaçable entre une position de déverrouillage, dans laquelle la tige est librement axialement mobile, et une position de verrouillage de la tige, sous l'action de la base (40) du U adaptée pour se déformer élastiquement lors du déplacement de la branche (39) dans sa position de verrouillage.

4. Ensemble selon la revendication 3, **caractérisé en ce que** la branche de blocage (39) s'étend perpendiculairement à l'axe (3) devant l'extrémité libre (14) du corps creux (8) et **en ce que** les éléments de retenue (50) sont formés par des saillies venant en prise derrière ladite extrémité frontale (14), les éléments en saillie de retenue (50) pouvant être libérés par un mouvement axial correspondant cu corps creux (8).

5. Ensemble selon l'une des revendications 3 ou 4, **caractérisé en ce que** la branche (38) de l'agrafe de verrouillage (30) est réalisée sous forme d'un élément en forme d'une plaque dans laquelle est découpée une ouverture (42) adaptée pour la mise en place de la plaque sur la surface périphérique du corps creux (8) et comportant à son pourtour des griffes (43) d'ancrage de la plaque sur ladite surface de corps creux.

6. Ensemble selon l'une des revendications 4 ou 5, **caractérisé en ce que** la branche de blocage (39) de l'agrafe de verrouillage (30) est réalisée sous forme d'un élément en forme d'une plaque dans laquelle est découpée une ouverture (45) comportant une portion (46) de passage libre de la tige (3) et une portion (47) de blocage de la tige lorsque celle-ci est engagée dans cette portion (47), la plaque de blocage (39) étant déplaçable entre ces deux portions dans l'ouverture (45).

7. Ensemble selon la revendication 6, **caractérisé en ce que** la portion d'ouverture de blocage (47) comporte des bords (48) situés en regard, qui sont réalisés sous forme d'arêtes susceptibles de s'engager dans la denture de la portion crantée (4) de la tige.

8. Ensemble selon l'une des revendications 6 ou 7, **caractérisé en ce que** les éléments de retenue (50) sont formés par des portions en saillie de la plaque de blocage (39) prévues au niveau de l'ouverture de passage libre (46) de la tige (3).

9. Ensemble selon l'une des revendications 3 à 8, **caractérisé en ce que** la base de l'agrafe de verrouillage (30) est formée par une barrette élastiquement déformable.

10. Ensemble selon l'une des revendications 3 à 9, **caractérisé en ce que** la plaque (38) de fixation de l'agrafe de verrouillage (30) sur le corps creux constitue également un moyen de blocage sur le corps creux, d'une bague (26) permettant le montage d'un organe de commande de l'agencement, tel qu'un levier.

## Claims

1. A method for mounting an arrangement, such as a hand brake in a vehicle, of the type comprising an assembly composed of a plurality of parts, which can be assembled against the forces of spring means, according to which the component parts of said assembly are mounted under the effect of said spring means in a case, according to which the component parts of the assembly (1) mentioned above are pre-assembled in order to obtain a pre-assembled assembly having the configuration that the assembly will have inside the case (2), the pre-assembled assembly is locked in this configuration, is placed inside the case (2), connections of the assembly (1) thus pre-assembled and mounted in the case are established with the arrangement, and then the pre-assembled assembly is unlocked and connected, **characterized in that** the unlocking of the assembly (1) is done automatically during the first actuation of the arrangement.

2. The method according to claim 1 for mounting an arrangement comprising an assembly comprising an actuating rod of a device, such as a brake, axially mobile inside a tubular unit movable by a control member, as well as parts for integrating the rod of said hollow unit and releasing the rod, as well as spring means opposing the joining of this assembly, **characterized in that** the assembly (1) is associated with a clip (30) for locking the assembly in the above-mentioned pre-assembled state, which can be moved between a neutral unlocking position and a locking position, and **in that** this clip is designed so that it returns automatically from the locking position thereof into the unlocking position thereof during the first actuation of the arrangement.

3. An assembly for implementing the method according to claim 2, **characterized in that** the clip (30) has the general shape of a letter U, one branch (38) of which can be made integral with said hollow unit (8), and the other branch (39) of which is a means for axially blocking the rod (3) and can be displaced between an unlocking position, wherein the rod is freely axially mobile, and a locking position of the rod, under the effect of the base (40) of the letter U adapted to deform elastically during the displacement of the branch (39) in the locking position thereof.

4. The assembly according to claim 3, **characterized in that** the blocking branch (39) extends perpendicularly to the axis (3) in front of the free end (14) of the hollow unit (8), and **in that** the holding elements (50) are formed by protrusions engaging behind said front end (14), wherein the protruding holding elements (50) can be released by a corresponding axial movement of the hollow unit (8).

5. The assembly according to any of claims 3 or 4, **characterized in that** the branch (38) of the locking clip (30) is made as an element having the shape of a plate, from which an opening (42) is cut out, adapted for placing the plate on the peripheral surface of the hollow unit (8) and comprising at the circumference thereof claws (43) for securing the plate on said hollow unit surface.

6. The assembly according to any of claims 4 or 5, **characterized in that** the branch (39) for blocking the locking clip (30) is made as an element having the shape of a plate from which an opening (45) is cut out, comprising a portion (46) for free passage of the rod (3) and a portion (47) for blocking the rod when it is engaged in this portion (47), the blocking plate (39) being movable between these two portions in the opening (45).

7. The assembly according to claim 6, **characterized in that** the blocking opening portion (47) comprises rims (48) located opposite each other, which are made as edges which can engage in the teeth of the dented portion (4) of the rod.

8. The assembly according to any of claims 6 or 7, **characterized in that** the holding elements (50) are formed by protruding portions of the blocking plate (39) provided at the free passage opening (46) of the rod (3).

9. The assembly according to any of claims 3 to 8, **characterized in that** the base of the locking clip (30) is formed by an elastically deformable flange.

10. The assembly according to any of claims 3 to 9, **characterized in that** the plate (38) for fixing the locking clip (30) on the hollow unit is also a means for blocking on the hollow unit a ring (26) allowing a member for controlling the arrangement, such as a lever, to be mounted.

## Patentansprüche

1. Verfahren zum Einbauen einer Anordnung, wie etwa einer Handbremse in einem Fahrzeug, von der Art, die eine Baugruppe umfasst, die aus einer Vielzahl von Teilen besteht, die gegen die Kräfte von Federmitteln zusammengefügt werden können, wobei die Einzelteile der Baugruppe unter der Einwirkung der Federmittel in ein Gehäuse eingebaut werden, wobei die Einzelteile der genannten Baugruppe (1) vormontiert werden, um eine vormontierte Baugruppe zu erhalten, welche die Konfiguration aufweist, die die Baugruppe im Innern des Gehäuses (2) haben wird, wobei die vormontierte Baugruppe in dieser Konfiguration festgelegt wird, wobei sie in das Gehäuse (2) gesetzt wird, wobei die Anschlüsse der derart vormontierten und in das Gehäuse eingebauten Baugruppe (1) an die Anordnung hergestellt werden, und wobei dann die vormontierte Baugruppe freigesetzt und angeschlossen wird, **dadurch gekennzeichnet, dass** das Freigeben der Baugruppe (1) automatisch während der ersten Betätigung der Anordnung erfolgt.

2. Verfahren nach Anspruch 1 zum Einbauen einer Anordnung umfassend eine Baugruppe, die eine Betätigungsstange einer Vorrichtung umfasst, wie etwa eine Bremse, die axial im Innern eines röhrenförmigen Körpers durch ein Steuerorgan bewegbar ist, so wie Teile zum festen Verbinden der Stange des Hohlkörpers und zum Freigeben der Stange, sowie Federmittel, die dem Zusammenfügen dieser Baugruppe entgegenwirken, **dadurch gekennzeichnet, dass** der Baugruppe (1) eine Schelle (30) zum Festlegen der Baugruppe in dem genannten vormontierten Zustand zugeordnet ist, die zwischen einer neutralen Position zum Freisetzen und einer Position zum Festlegen bewegbar ist, und dass diese Schelle derart ausgelegt ist, dass sie während der ersten Betätigung der Anordnung automatisch von ihrer Position zum Festlegen in ihre Position zum Freisetzen zurückkehrt.

3. Baugruppe zum Ausführen des Verfahrens nach Anspruch 2, **dadurch gekennzeichnet, dass** die Schelle (30) die allgemeine Form eines U aufweist, dessen einer Schenkel (38) mit dem Hohlkörper (8) fest verbunden werden kann, und dessen anderer Schenkel (39) ein Mittel zum axialen Blockieren der Stange (3) bildet und zwischen einer Position zum Freisetzen, in der die Stange frei axial beweglich ist, und einer Position zum Festlegen der Stange unter der Einwirkung der Basis (40) des U bewegt werden kann, die dazu geeignet ist, um sich während der Bewegung des Schenkels (39) in seine Position zum Festlegen elastisch zu verformen.

4. Baugruppe nach Anspruch 3, **dadurch gekennzeichnet, dass** der Blockierschenkel (39) sich zur Achse (3) vor dem freien Ende (14) des Hohlkörpers (8) rechtwinklig erstreckt, und dass die Halteelemente (50) durch Vorsprünge gebildet werden, die das Vorderende (14) hintergreifen, wobei die vorstehenden Halteelemente (50) durch eine entsprechende Axialbewegung des Hohlkörpers (8) freigegeben werden können.

5. Baugruppe nach einem der Ansprüche 3 oder 4, **dadurch gekennzeichnet, dass** der Schenkel (38) der Festlegeschelle (30) in Form eines Elements ausgebildet ist, das die Form einer Platte hat, aus der eine Öffnung (42) ausgeschnitten ist, die dazu geeignet ist, die Platte auf die Randoberfläche des Hohlkörpers (8) zu setzen, und an ihrem Umfang Klauen (43) zum Verankern der Platte auf der Hohlkörperoberfläche umfasst.

6. Baugruppe nach einem der Ansprüche 4 oder 5, **dadurch gekennzeichnet, dass** der Schenkel (39) zum Blockieren der Festlegeschelle (30) als ein Element ausgebildet ist, das die Form einer Platte aufweist, aus der eine Öffnung (45) ausgeschnitten ist, die einen Abschnitt (46) zum ungehinderten Durchgang der Stange (3) und einen Abschnitt (47) zum Blockieren der Stange umfasst, wenn sie in diesen Abschnitt (47) in Eingriff gebracht wird, wobei die Blockierplatte (39) zwischen diesen beiden Abschnitten in der Öffnung (45) bewegbar ist.

7. Baugruppe nach Anspruch 6, **dadurch gekennzeichnet, dass** blockierende Öffnungsabschnitt (47) gegenüberliegende Ränder (48) umfasst, die als Kanten ausgebildet sind, die in die Verzahnung des Zahnabschnitts (4) der Stange eingreifen können.

8. Baugruppe nach einem der Ansprüche 6 oder 7, **dadurch gekennzeichnet, dass** die Halteelemente (50) von vorstehenden Abschnitten der Blockierplatte (39) gebildet werden, die an der Öffnung (46) zum ungehinderten Durchgang der Stange (3) bereitgestellt werden.

9. Baugruppe nach einem der Ansprüche 3 bis 8, **dadurch gekennzeichnet, dass** die Basis der Verriegelungsschelle (30) durch einen elastisch verformbaren Steg gebildet wird.

10. Baugruppe nach einem der Ansprüche 3 bis 9, **dadurch gekennzeichnet, dass** die Platte (38) zum Befestigen der Festlegeschelle (30) auf dem Hohlkörper auch ein Mittel bildet, um auf dem Hohlkörper einen Ring (26) zu blockieren, der den Einbau eines Organs zum Steuern der Anordnung, wie etwa eines Hebels, ermöglicht.
